# FASCICULE DE BREVET EUROPEEN

(11) **EP 3 344 543 B1**
(45) Date de publication et mention de la délivrance du brevet: **22.04.2020**
(21) Numéro de dépôt: 16760063.4
(22) Date de dépôt: 01.09.2016
(51) Int. Cl.: B64D 11/06

(54) **SYSTÈME DE VERROUILLAGE PAR INERTIE D'UN ÉQUIPEMENT AMOVIBLE UTILISÉ DANS UN AÉRONEF**
SYSTEM ZUR TRÄGHEITSVERRIEGELUNG EINER ABNEHMBAREN VORRICHTUNG IN EINEM FLUGZEUG
SYSTEM FOR INERTIA-LOCKING A DETACHABLE APPARATUS USED IN AN AIRCRAFT

(30) Priorité: 02.09.2015 FR 1558127
(43) Date de publication de la demande: 11.07.2018
(73) Titulaire: Zodiac Seats France, 36100 Issoudun (FR)
(72) Inventeur: DELAGE, Vincent, 36100 Issoudun (FR); GUIRIMAND, Anne, 36100 Issoudun (FR)
(74) Mandataire: Marconnet, Sébastien
(86) Numéro de dépôt international: PCT/EP2016/070628
(87) Numéro de publication internationale: WO 2017/037182

(56) Documents cités:
- EP-A2- 1 375 794
- US-A- 5 144 725

## Description

La présente invention porte sur un système de verrouillage par inertie d'un équipement amovible utilisé dans un aéronef.

Certains équipements d'un siège d'avion ou plus généralement d'un support doivent être facilement démontables du support en utilisation normale, sans outil et avec une force modérée. En revanche, en cas de crash ou de test dynamique, ces mêmes équipements ne doivent pas s'éjecter du support sous l'effet de l'accélération afin d'éviter d'être projetés à l'intérieur de l'avion.

Le document US5144725 décrit un système de verrouillage comprenant un dispositif d'encliquetage muni d'une partie mâle et d'une partie femelle, ainsi qu'un système de verrouillage rotatif destiné à être actionné par l'utilisateur.

Le document EP1375794 décrit un mécanisme de verrouillage par inertie pour une porte de véhicule automobile.

L'invention vise à répondre à ce besoin en proposant un système de verrouillage par inertie selon la revendication 1.

L'invention permet ainsi, grâce aux deux états du système de verrouillage, d'autoriser le démontage de l'équipement dans le cas d'une utilisation normale tout en empêchant son démontage en cas de forte accélération. En outre, l'invention présente l'avantage d'être mécanique et de ne pas connaître de baisse de performances dans le temps.

Selon une réalisation, un écart entre une périphérie externe des protubérances des pattes non contraintes est supérieur à un diamètre de l'ouverture correspondante.

Selon une réalisation, le verrou est mobile en rotation par rapport au support autour d'un axe entre:
- une position de repos dans laquelle le verrou est dégagé d'un espace entre les deux pattes élastiquement déformables, et
- une position active dans laquelle le verrou est inséré dans l'espace séparant les deux pattes élastiquement déformables, en sorte que le verrou empêche un rapprochement des pattes l'une de l'autre,
- le passage de la position de repos à la position active du verrou étant engendré par l'accélération générée en cas de crash ou de tests dynamique.

Selon une réalisation, l'axe est de préférence sensiblement perpendiculaire par rapport à la direction de l'accélération.

Selon une réalisation, l'équipement amovible est choisi notamment parmi un des équipements suivants: une porte de meuble de rangement, une têtière, ou une fixation de lampes torches ou d'interphones.

Selon une réalisation, le support est choisi parmi un des supports suivants: un meuble de rangement, une structure de siège, ou un support de lampes torches ou d'interphones.

L'invention a également pour objet un siège, notamment d'aéronef, comportant une structure de siège et une têtière assemblés entre eux au moyen d'un système de verrouillage par inertie tel que précédemment défini.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- Les figures 1a et 1b sont des représentations schématiques de face et de profil du système de verrouillage par inertie selon la présente invention dans un état de verrouillage;
- Les figures 2a et 2b sont des représentations schématiques de face et de profil d'un système de verrouillage par inertie selon la présente invention dans un état de sur-verrouillage;
- La figure 3 est une vue en perspective d'un équipement de type têtière solidarisé à une structure de siège par l'intermédiaire d'un dispositif de verrouillage par inertie selon la présente invention;
- La figures 4 est une vue détaillé du dispositif de verrouillage par inertie de la figure 3.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

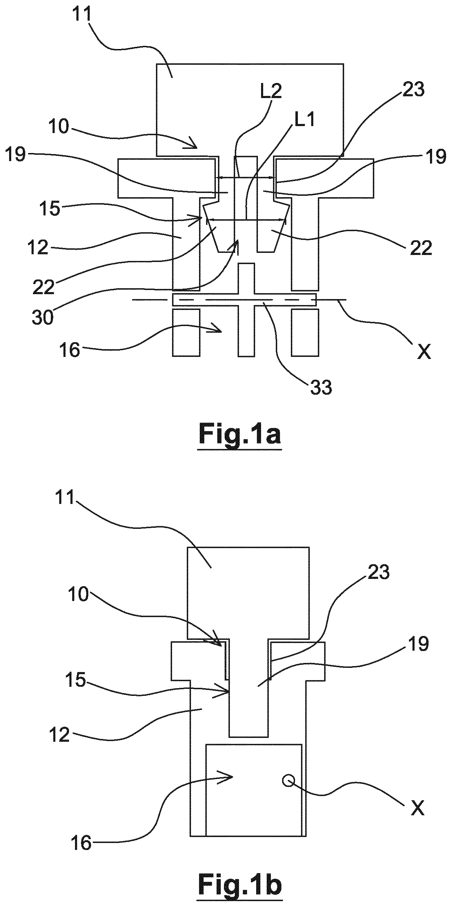

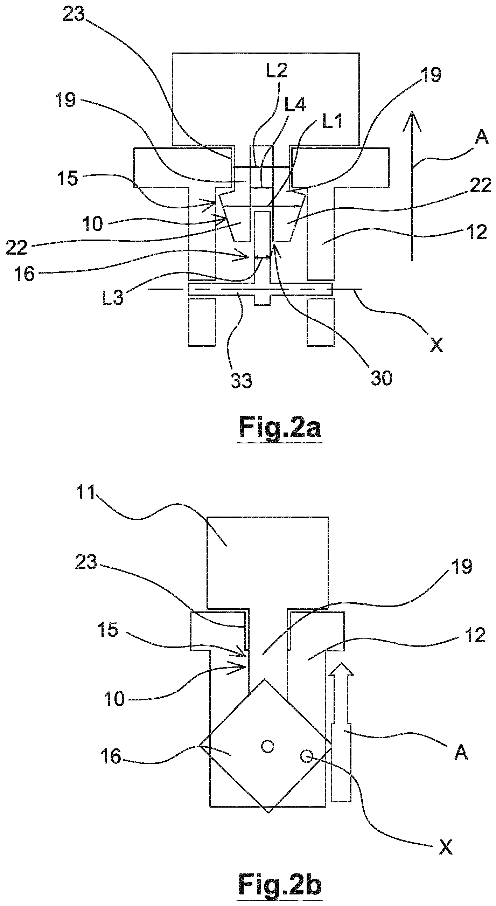

Les figures 1 à 4 montrent un système de verrouillage 10 par inertie installé entre un équipement amovible 11, par exemple une têtière, et un support 12 tel qu'une structure de siège. Le système de verrouillage 10 est apte à prendre un premier état, dit de verrouillage, dans lequel l'équipement 11 peut être désolidarisé du support 12 pour une utilisation normale, tel que montré sur les figures 1a et 1b, et un deuxième état dit, de sur-verrouillage dans lequel l'éjection de l'équipement 11 est empêchée sous l'effet d'une accélération générée par exemple en cas de crash ou de test dynamique, tel que montré sur les figures 2a et 2b.

A cet effet, le système de verrouillage 10 comporte un système d'encliquetage 15 et un verrou 16 associé. Le système d'encliquetage 15 comporte en l'occurrence deux pattes 19 élastiquement déformables solidaires de l'équipement amovible 11. Ces pattes 19 sont munies chacune d'une protubérance 22 du côté de leur extrémité libre. Les pattes 19 sont destinées à pénétrer à l'intérieur d'une ouverture 23 de forme correspondante ménagée dans la structure de siège 12.

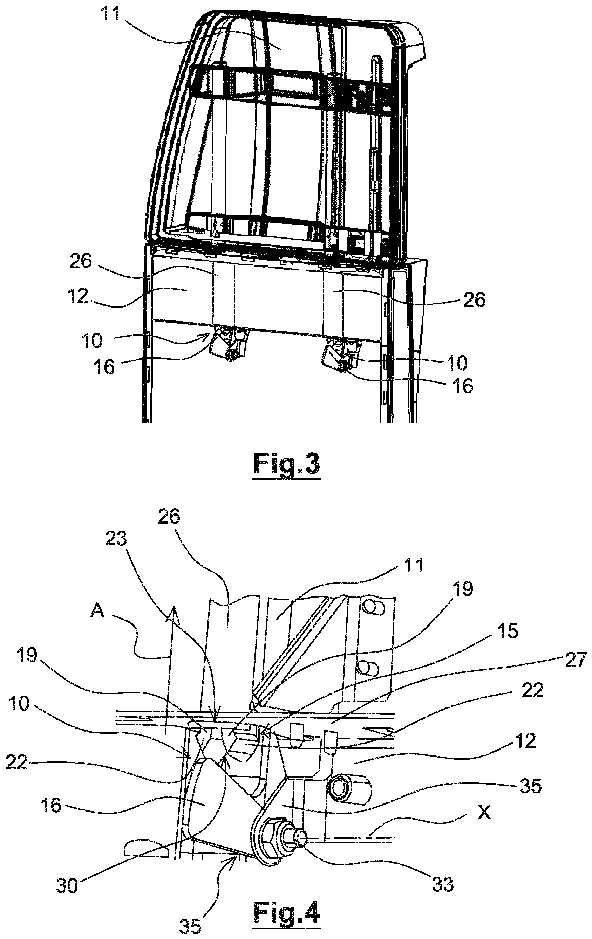

Ainsi, comme cela est illustré sur la figure 3, la têtière 11 comporte deux tiges 26 munies chacune de deux pattes 19 déformables aptes à venir s'engager à l'intérieur de l'ouverture 23 ménagée dans une plaque 27 horizontale de la structure de siège 12.

Comme cela est bien visible sur les figures 1a, 2a, et 4, les pattes 19 sont séparées entre elles par un espace 30, de telle façon que lors de l'insertion des pattes 19 à l'intérieur de l'ouverture 23 ou lors de leur retrait, les pattes 19 peuvent se rapprocher l'une de l'autre avant de s'écarter de nouveau l'une de l'autre une fois que les protubérances 22 ont traversé l'ouverture 23.

Afin d'assurer l'assemblage entre l'équipement amovible 11 et le support 12 dans l'état verrouillé, l'écart L1 entre la périphérie externe des protubérances 22 des pattes 19 non contraintes est supérieur au diamètre L2 de l'ouverture 23 ménagée dans la structure de siège 12.

Bien entendu, en variante, la configuration pourra être inversée; c'est-à-dire que les pattes 19 appartiennent au support 12 tandis que l'ouverture 23 est ménagée dans l'équipement amovible 11.

Par ailleurs, lorsqu'il est soumis à une accélération générée par un crash ou un test dynamique, le verrou 16 est mobile en rotation par rapport au support 12 autour d'un axe X qui est de préférence sensiblement perpendiculaire par rapport à la direction de l'accélération A. Par sensiblement perpendiculaire, on entend un angle égal à 90 degrés plus ou moins 10 degrés.

Le verrou 16 pourra comporter une plaque de forme sensiblement rectangulaire ou carré, tel que cela est montré sur les figures 1b et 2b ou une forme allongée, tel que cela est représenté sur la figure 4. L'axe X est excentré par rapport au centre de la plaque en étant implanté au niveau d'un coin du carré par exemple ou d'une extrémité de la plaque.

Pour réaliser le montage en rotation du verrou 16, une goupille 33 traversant la plaque pourra être engagée à l'intérieur de trous réalisés dans des flasques 35 positionnés de part et d'autre du verrou 16, tel que cela est montré sur la figure 4. En variante, le verrou 16 pourra comporter des pivots s'étendant de part et d'autre des faces latérales de la plaque pénétrant dans des trous de forme complémentaire réalisés dans les flasques 35.

Lors de l'accélération A, le verrou 16 est destiné à venir s'insérer à l'intérieur de l'espace 30 séparant les deux pattes 19 élastiquement déformables pour empêcher les pattes 19 de pouvoir se rapprocher pour autoriser le démontage de la têtière 11. Le système de verrouillage 10 est alors dans un état de sur-verrouillage. A cet effet, le verrou 16 pourra présenter une épaisseur L3 sensiblement égale ou légèrement inférieure à la largeur L4 de l'espace 30 mesurée suivant l'axe X, comme cela est illustré par la figure 2a.

On décrit ci-après le fonctionnement du système de verrouillage 10 selon la présente invention. Sur les figures 1a, 1b, et 4, le verrou 16 est dans une position de repos dans laquelle le verrou 16 est dégagé de l'espace 30 entre les deux pattes 19 coopérant avec l'ouverture 23 correspondante. On observe que le maintien de l'équipement 11 sur la structure de siège 12 dans l'état de verrouillage est assuré par le fait que l'écart L1 entre la périphérie externe des protubérances 22 des pattes 19 non contraintes est supérieur au diamètre L2 de l'ouverture 23 ménagée dans la structure de siège 12.

Lorsque l'utilisateur tire sur l'équipement 11 afin de le désolidariser de la structure du siège 12, les deux pattes 19 se rapprochent l'une de l'autre par déformation élastique pour permettre aux protubérances 22 de passer à travers l'ouverture 23 ménagée dans la structure de siège 12. L'état de verrouillage autorise ainsi un démontage aisé de l'équipement 11, par exemple pour son remplacement ou la réalisation d'une opération de maintenance.

Lors de la remise en place de l'équipement 11 sur la structure de siège 12, les pattes 19 se rapprochent l'une de l'autre par déformation élastique lors de l'insertion des protubérances 22 à l'intérieur de l'ouverture 23 pour s'écarter ensuite l'une de l'autre une fois que les protubérances 22 ont traversé entièrement l'ouverture 23 afin d'assurer le maintien du système 10 dans l'état verrouillé.

En cas de crash, l'accélération A engendre un déplacement en rotation du verrou 16 en sorte que ce dernier vient s'insérer dans l'espace 30 séparant les deux pattes 19, comme cela est illustré sur les figures 2a et 2b. Le verrou 16, qui est alors en position active, empêche le rapprochement des pattes 19 l'une de l'autre pour permettre aux protubérances 22 de passer à travers de l'ouverture 23 ménagée dans la structure de siège 12. L'équipement 11 ne peut donc plus être désolidarisé de la structure de siège 12 sous l'effet de l'accélération.

En variante, l'équipement amovible 11 est une porte de meuble de rangement, ou un moyen de fixation de lampes torches ou d'interphones. Le support 12 correspondant sera alors un meuble de rangement ou un support de lampes torches ou d'interphones.

## Revendications

1. Système de verrouillage (10) par inertie destiné à être installé entre un équipement amovible (11) utilisable dans un aéronef et un support (12), ledit système de verrouillage (10) étant apte à prendre un premier état, dit de verrouillage, dans lequel l'équipement peut être désolidarisé du support (12), et un deuxième état, dit de sur-verrouillage dans lequel une éjection de l'équipement amovible (11) est empêchée sous l'effet d'une accélération (A) générée par exemple en cas de crash ou de test dynamique et ledit système de verrouillage comportant un système d'encliquetage (15) et un verrou (16) associé, ledit verrou étant mobile entre une position de repos et une position active permettant le sur-verrouillage du système, le passage de la position de repos à la position active du verrou (16) étant engendré par l'accélération (A) générée en cas de crash ou de test dynamique, **caractérisé en ce que** ledit système d'encliquetage (15) comporte:
- deux pattes (19) élastiquement déformables munies chacune d'une protubérance (22) du côté de leur extrémité libre, les deux pattes (19) destinées à être solidaires de l'un des éléments parmi l'équipement amovible (11) et le support (12), et
- une ouverture (23) de forme correspondante réalisée dans l'autre des éléments parmi l'équipement amovible (11) et le support (12).

2. Système de verrouillage (10) selon la revendication 1, **caractérisé en ce qu'**un écart (L1) entre une périphérie externe des protubérances (22) des pattes (19) non contraintes est supérieur à un diamètre (L2) de l'ouverture (23) correspondante.

3. Système de verrouillage (10) selon la revendication 1 ou 2, **caractérisé en ce que** le verrou (16) est mobile en rotation par rapport au support (12) autour d'un axe (X) entre:
- la position de repos dans laquelle le verrou (16) est dégagé d'un espace (30) entre les deux pattes (19) élastiquement déformables, et
- la position active dans laquelle le verrou (16) est inséré dans l'espace (30) séparant les deux pattes (19) élastiquement déformables, en sorte que le verrou (16) empêche un rapprochement des pattes (19) l'une de l'autre,
- le passage de la position de repos à la position active du verrou (16) étant engendré par l'accélération (A) générée en cas de crash ou de test dynamique.

4. Système de verrouillage (10) selon la revendication 3, **caractérisé en ce que** l'axe (X) est de préférence sensiblement perpendiculaire par rapport à une direction de l'accélération (A).

5. Système de verrouillage (10) selon l'une quelconque des revendications 1 à 4, **caractérisé en ce que** l'équipement amovible (11) est choisi notamment parmi un des équipements suivants: une porte de meuble de rangement, une têtière, ou un moyen de fixation de lampes torches ou d'interphones.

6. Système de verrouillage (10) selon l'une quelconque des revendications 1 à 5, **caractérisé en ce que** le support (12) est choisi parmi un des supports suivants: un meuble de rangement, une structure de siège, ou un support de lampes torches ou d'interphones.

7. Siège, notamment d'aéronef, comportant une structure de siège (12) et une têtière (11) assemblés entre eux au moyen d'un système de verrouillage (10) par inertie tel que défini selon l'une quelconque des revendications précédentes.

## Patentansprüche

1. Trägheitsverriegelungssystem (10), das zwischen einer lösbaren Ausrüstung (11), die in einem Flugzeug verwendbar ist, und einer Stütze (12) anordnen soll, wobei das Verriegelungssystem (10) einen ersten Zustand, sogenannten Verriegelungszustand, in dem die Ausrüstung von der Stütze (12) gelöst werden kann, und einen zweite Zustand, sogenannten Überverriegelungszustand, in dem der Auswurf der lösbare Ausrüstung (11) aufgrund einer Beschleunigung (A) zum Beispiel im Falle eines Aufpralls oder eines dynamischen Tests verhindert wird, einnehmen kann, und wobei das Verriegelungssystem ein Rastsystem (15) und einen damit verbundenen Riegel (16) umfasst, wobei der Riegel zwischen einer Ruheposition und einer aktiven, die Überverriegelung des Systems ermöglichenden Position beweglich ist, wobei der Übergang des Riegels (16) von der Ruheposition in die aktive Position durch die Beschleunigung (A) im Falle eines Aufpralls oder eines dynamischen Tests erzeugt wird, **dadurch gekennzeichnet ist, dass** das Rastsystem (15) umfasst:
- zwei elastisch verformbare Zungen (19), die an ihren freien Enden jeweils mit einem Vorsprung (22) versehen sind, wobei die beiden Zungen (19) befestigt mit einer von der lösbaren Ausrüstung (11) und der Stütze (12) sind, und
- eine Öffnung (23) mit entsprechender Form in der anderen von der lösbaren Ausrüstung (11) und der Stütze (12).

2. Trägheitsverriegelungssystem (10) nach Anspruch 1, **dadurch gekennzeichnet, dass** ein Abstand (L1) zwischen einem Außenumfang der Vorsprünge (22) der nicht gespannten Zungen (19) relativ zu einem Durchmesser (L2) der entsprechenden Öffnung (23) höher ist.

3. Trägheitsverriegelungssystem (10) nach Anspruch 1 oder 2, **dadurch gekennzeichnet, dass** der Riegel (16) relativ zum Träger (12) um eine Achse (X) zwischen:
- der Ruheposition, in der der Riegel (16) aus einem Raum (30) zwischen den beiden elastisch verformbaren Zungen (19) gelöst ist, und
- der aktiven Position, in der der Riegel (16) in den Raum (30) zwischen den beiden elastisch verformbaren Zungen (19) eingeführt wird, so dass der Riegel (16) das Näherkommen der Zungen (19) verhindert, drehbeweglich ist,
- wobei der Übergang des Riegels (16) von der Ruheposition in die aktive Position durch die Beschleunigung (A) im Falle eines Aufpralls oder eines dynamischen Tests erzeugt wird.

4. Trägheitsverriegelungssystem (10) nach Anspruch 3, **dadurch gekennzeichnet, dass** die Achse (X) vorzugsweise im Wesentlichen senkrecht zu einer Beschleunigungsrichtung (A) ausgerichtet ist.

5. Trägheitsverriegelungssystem (10) nach einem der Ansprüche 1 bis 4, **dadurch gekennzeichnet, dass** die lösbare Ausrüstung (11) insbesondere unter den folgenden Ausrüstungen ausgewählt ist: einer Schranktür, einer Kopfstütze oder einem Mittel zum Befestigen von Taschenlampen oder Interphonanlagen.

6. Trägheitsverriegelungssystem (10) nach einem der Ansprüche 1 bis 5, **dadurch gekennzeichnet, dass** die Stütze (12) unter den folgenden Stützen ausgewählt ist: einem Schrank, einer Sitzstruktur oder einer Stütze für Taschenlampen oder Interphonanlagen.

7. Sitz, insbesondere für ein Flugzeug, mit einer Sitzstruktur (12) und einer Kopfstütze (11), die mittels eines Trägheitsverriegelungssystems (10) nach einem der vorhergehenden Ansprüche zusammengesetzt sind.

## Claims

1. An inertial locking system (10) to be placed between a removable equipment (11), usable in an aircraft, and a support (12), said locking system (10) being able to take up a first state, so-called locking state, in which the equipment can be detached from the support (12), and a second state, so-called over-locking state, in which the removable equipment (11) is prevented from being ejected due to an acceleration (A) for example in the event of a crash or dynamic test and said locking system comprising a clipping system (15) and a lock (16) associated therewith, said lock being movable between a rest position and an active position allowing the system to be over-locked, the transition from the rest position to the active position of the lock (16) being generated by the acceleration (A) in the event of a crash or dynamic test, **characterized in that** said clipping system (15) comprises:
- two elastically deformable legs (19) each provided with a protrusion (22) on their free ends, the two legs (19) being fixed to one of the removable equipment (11) and the support (12), and
- an opening (23) of corresponding shape made in the other of the removable equipment (11) and the support (12).

2. The locking system (10) according to claim 1, **characterized in that** a spacing (L1) between an external periphery of the protrusions (22) of the unconstrained legs (19) is superior to a diameter (L2) of the corresponding opening (23).

3. The locking system (10) according to claim 1 or 2, **characterized in that** the lock (16) is rotatingly movable relative to the support (12) about an axis (X) between:
- the rest position in which the lock (16) is released from a space (30) between the two elastically deformable legs (19), and
- the active position in which the lock (16) is inserted into the gap (30) separating the two elastically deformable legs (19), so that the lock (16) prevents the legs (19) from approaching closer together,
- the transition from the rest position to the active position of the lock (16) being caused by the acceleration (A) in the event of a crash or dynamic test.

4. The locking system (10) according to claim 3, **characterized in that** the axis (X) is preferably substantially perpendicular to a direction of acceleration (A).

5. The locking system (10) according to any one of the claims 1 to 4, **characterized in that** the removable equipment (11) is selected in particular among the following equipments: a storage cabinet door, a headrest, or a means for fixing flashlights or intercoms.

6. The locking system (10) according to any one of the claims 1 to 5, **characterized in that** the support (12) is selected among the following supports: a storage unit, a seat structure, or a support for flashlights or intercoms.

7. Seat, in particular for an aircraft, comprising a seat structure (12) and a headrest (11) assembled together by means of an inertial locking system (10) as defined in any one of the preceding claims.
